# EUROPÄISCHE PATENTSCHRIFT

(11) **EP 2 628 972 B1**
(45) Veröffentlichungstag und Bekanntmachung des Hinweises auf die Patenterteilung: **20.07.2016**
(21) Anmeldenummer: 12405021.2
(22) Anmeldetag: 20.02.2012
(51) Int. Cl.: F16F 1/54, F16F 9/32, B60G 11/22, B60G 17/019

(54) **Gummifederelement-Drehwinkelmess-system und dessen Verwendung**
Rubber spring element rotation angle measuring system and use of same
Système de mesure de l'angle de rotation d'un élément de ressort en caoutchouc et son utilisation

(43) Veröffentlichungstag der Anmeldung: 21.08.2013
(73) Patentinhaber: Rosta AG, 5502 Hunzenschwil (CH)
(72) Erfinder: Mollenkopf Gamper, Marc, 4127 Birsfelden (CH)
(74) Vertreter: EGLI-EUROPEAN PATENT ATTORNEYS

(56) Entgegenhaltungen:
- EP-A2- 0 282 333
- DE-A1- 4 335 115
- DE-A1-102005 033 887
- JP-A- 11 319 326

## Beschreibung

Die Erfindung betrifft ein Gummifederelement-Drehwinkelmesssystem nach Patentanspruch 1 und dessen Verwendung nach Patentanspruch 12 und 13.

Es sind elastische Lager zur Schwingungsdämpfung bekannt, deren zueinander drehbeweglichen Gehäuse durch Einlagerung von Gummimaterial drehgelenkartig abgefedert sind. Das Gummimaterial kann durch Klebemittel oder allgemein üblich durch Vulkanisieren mit den beiden Gehäusen verbunden sein. Versagt diese Verbindung jedoch durch Überschreiten eines maximalen Drehwinkels, durch überhöhte Schubkräfte oder allgemein durch Übermüdung, so ist die gesamte Lagerung ausser Kraft gesetzt.

Aus dem Stand der Technik ist ferner ein Gummifederelement zur Schwingungsdämpfung bekannt, welches ein Aussengehäuse und ein hierin eingesetztes Innengehäuse enthält. Die Gehäuse haben ein von der Kreisform unterschiedliches Profil, wobei die Kanten der jeweiligen Gehäuse zueinander derart winkelversetzt angeordnet sind, dass eine Vielzahl von Zwischenräumen zwischen dem Aussengehäuse und dem Innengehäuse gebildet ist. Diese Zwischenräume sind jeweils teilweise mit elastischen Gummisträngen als Federelement gefüllt. Die elastischen Gummistränge halten das Innengehäuse derart in Relation zum Aussengehäuse gelagert, dass sich die Achsen des Innengehäuses und Aussengehäuses bei einem zumindest abschnittsweisen Verdrehen der Gehäuse in Relation zueinander auf einer gleichen Achse erstrecken.

So sind beispielsweise Gummifederelemente bekannt, welche ein profiliertes Aussengehäuse und ein entsprechend profiliertes Innengehäuse enthalten. Das Profil kann ein Rechteck beschreiben. Es sind allerdings auch weitere polygonale Profile möglich. Bei einem Beispiel mit rechteckigen Gehäusen, wobei die Kanten der Gehäuse zueinander winkelversetzt ausgerichtet sind, sind somit vier Zwischenräume zwischen den Gehäusen gebildet. In diese Zwischenräume sind Gummistränge eingepresst, welche die Zwischenräume nur teilweise füllen. Hierdurch bilden die Aussenfläche des Innengehäuses und die Innenfläche des Aussengehäuses ein Widerlager für die Gummistränge, wodurch diese am Herausrutschen gehindert werden. Somit verbleiben deren Positionen unverändert. Die Zuverlässigkeit des Gummifederelements ist ferner unabhängig von der Haftung des Gummimaterials an den Gehäusen. Ausserdem werden die Bildung von Reibungswärme und die frühzeitige Abnutzung des Gummimaterials verhindert, da keinerlei Rutschen hervorgerufen wird.

Dokument JP 11 319 326 A zeigt ein Gummifederelement gemäß dem Oberbegriff von Anspruch 1.

Wesentlich ist die derartige Bereitstellung der Gummistränge in den Zwischenräumen, dass diese nicht vollständig ausgefüllt werden. Der nicht ausgefüllte Teil des Zwischenraums stellt jeweils einen Spielraum dar, innerhalb welchen sich die Gummistränge bei einem Verdrehen der Gehäuse in Relation zueinander abrollen bzw. abwälzen können. Hierdurch ist die Drehbewegung des jeweiligen Gummifederelements besonders elastisch.

Es besteht ein Problem darin, dass die Gehäuse in Relation zueinander zu sehr verdreht werden können, wodurch das Gummifederelement zerstört oder dessen Lebensdauer stark verkürzt werden kann. Es besteht ferner ein Problem darin, dass das Gummifederelement aufgrund von Überalterung, selbst auch bei einem Betrieb innerhalb von dessen Toleranzbereich, plötzlich versagt und ausfällt.

Bei einem Versagen eines Gummifederelements können hieran direkt gekoppelte Maschinenbauteile in Mitleidenschaft gezogen werden. Es kann auch zu einem Ausfall oder sogar einer Beschädigung der gesamten Maschine kommen. Bei einem Einsatz eines Gummifederelements in einem Fahrzeug können bei einem Versagen eines oder mehrerer Gummifederelemente besonders sicherheitsrelevante Bereiche des Fahrzeugs (z.B. Bauteile zur Stossabsorption, Lagerung von Motor und Getriebe, Lenkung, usw.) ausfallen. Hierdurch wird die Unfallgefahr erhöht und werden somit Leben und Gesundheit von Personen gefährdet.

Um dem Problem zu begegnen, wird derzeit vorgeschlagen, die Gummifederelemente nach einem vorgegebenen Wartungsintervall auszutauschen. Dieses Wartungsintervall bezieht sich hierbei lediglich auf die Zeit seit dem Einbau. Hierbei werden in der Regel aber auch Gummifederelemente ausgetauscht, welche auch über Jahre hinaus noch ihren zuverlässigen Dienst verrichten können.

Ein solcher Austausch setzt einen langandauernden Maschinenstillstand voraus, wodurch hohe Maschinenausfallkosten entstehen. Zudem ist die Arbeit zum Austauschen sehr zeitintensiv, da die Gummifederelemente oftmals an unzugänglichen Bereichen einer Maschine installiert sind. Um einen Zugriff auf die Gummifederelemente zu erhalten, müssen daher zuvor weitere Bauteile demontiert werden. Ein weiteres Problem besteht darin, dass die Gummifederelemente nur sehr mühsam ausgetauscht werden können, da sie oftmals unter Presspassung in entsprechende Einsetzaugen von Maschinenbauteilen eingepasst bzw. eingepresst sind. Somit ist der Austausch eines Gummifederelements mühsam, sehr teuer und zeitintensiv.

Es ist Aufgabe der vorliegenden Erfindung, die zuvor aufgeführten Probleme aus dem Stand der Technik zu beseitigen.

Diese Aufgabe wird durch die Merkmale des Patentanspruchs 1 gelöst.

Erfindungsgemäss enthält das Gummifederelement-Drehwinkelmesssystem zumindest ein Gummifederelement, welches ein Aussengehäuse und ein hierin eingesetztes Innengehäuse enthält, wobei die Gehäuse derart in Relation zueinander angeordnet sind, dass eine Vielzahl von Zwischenräumen zwischen dem Aussengehäuse und dem Innengehäuse gebildet ist, welche jeweils teilweise mit elastischen Gummisträngen als Federelement gefüllt sind, welche das Innengehäuse derart in Relation zum Aussengehäuse gelagert halten, dass sich die Achsen des Innengehäuses und Aussengehäuses bei einem zumindest abschnittsweisen Verdrehen der Gehäuse in Relation zueinander auf einer gleichen Achse erstrecken. Das Innengehäuse und das Aussengehäuse sind aus einem elektrisch leitfähigen Material erstellt. Das Gummifederelement-Drehwinkelmesssystem umfasst ferner eine Drehwinkelmessanordnung mit einer Erfassungsvorrichtung, welche über elektrische Leitungen mit jeweils dem Innengehäuse und dem Aussengehäuse elektrisch verbunden ist, wobei die Erfassungsvorrichtung ausgelegt ist, eine Veränderung von wenigstens einer elektrischen Eigenschaftinnerhalb der elastischen Gummistränge, welche durch eine Formveränderung der elastischen Gummistränge im Verlaufe eines Verdrehens zwischen dem Innengehäuse und Aussengehäuse hervorgerufen ist, zu erfassen, und ein Ausgangssignal in Ansprechen auf die Veränderung der elektrischen Eigenschaft an eine Ausgabeeinheit auszugeben.

Es wird somit ein Gummifederelement-Drehwinkelmesssystem geschaffen, bei welchem ein Drehwinkel zwischen Innengehäuse und Aussengehäuse in Relation zueinander auf überraschend einfache Art und Weise bestimmt werden kann. Im Gegensatz zu herkömmlichen Einrichtungen zum Bestimmen des Drehwinkels sind hierbei keine Messelemente einbezogen, welche einem Verschleiss unterliegen können. Hierdurch ist eine dauerhafte Zuverlässigkeit gegeben. Gleichzeitig erfolgt die Winkelausgabe nahezu in Echtzeit. Durch den Wegfall üblicher Messelemente werden zudem Kosten eingespart. Ein weiterer Vorteil besteht darin, dass die Drehwinkelmessanordnung durch Korrelation, z.B. der angelegten Last und/oder der jeweils gemessenen Drehwinkel in Relation zur erfassten tatsächlichen Betriebszeit (Netto-Betriebszeit), dazu in der Lage ist, eine Information darüber auszugeben, ob bzw. wann das Gummifederelement aufgrund von Materialermüdung von insbesondere den elastischen Gummisträngen auszutauschen ist. Hierdurch kann ein möglicherweise ermüdetes Gummifederelement, vor Eintritt eines Versagens oder einer Beschädigung rechtzeitig ausgetauscht werden. Somit können Folgekosten durch Reparatur einer mit Gummifederelementen bestückten Maschine oder Unfallrisiken eines mit Gummifederelementen bestückten Fahrzeugs, welche durch ein Versagen oder eine Beschädigung des Gummifederelements hervorgerufen werden, ausgeschlossen werden. Zugleich kann ein verfrühter bzw. nicht notwendiger Austausch von Gummifederelementen vermieden werden, wodurch Zeit, Mühen und Kosten eingespart werden. Es kann eine Kombination aus mehreren hintereinander geschalteten Gummifederelementen vorgesehen sein.

Vorzugsweise haben das Innengehäuse und das Aussengehäuse jeweils eine polygonale Innen- und/oder Aussenfläche. Hierbei werden die Gummistränge zwischen die jeweiligen Innenkantenbereiche des äusseren Polygons und den Aussenflächen des inneren Polygons eingesetzt. Bei einem Verdrehen der Gehäuse in Relation zueinander werden die Gummistränge elastisch verformt.

Vorzugsweise haben das Innengehäuse und das Aussengehäuse jeweils eine rechteckige Innen- und/oder Aussenfläche. Bei dieser Ausgestaltung werden, bei einem Winkelversatz zwischen Innengehäuse und Aussengehäuse, vier im Querschnitt dreieckige Zwischenräume gebildet, in welche die Gummistränge derart eingepresst werden, dass die Zwischenräume nicht gänzlich ausgefüllt sind. Bei dieser Ausgestaltung können die Kanten des Aussengehäuses abgerundet sein, sodass sich die Gummistränge möglichst grossflächig am Aussengehäuse anschmiegen. Hierdurch werden die Gummistränge gleichmässig elastisch verformt. Zudem wird durch die Vermeidung von scharfkantigen Bereichen die Lebensdauer der Gummistränge erhöht.

Vorzugsweise sind das Innengehäuse und das Aussengehäuse durch die elastischen Gummistränge bei in Relation zueinander um 45° versetzter Innen- und/oder Aussenfläche gehalten. Diese symmetrische Ausgestaltung schafft ein Gummifederelement-Drehwinkelmesssystem, dessen Gummifederelement beim Anlegen eines gleichen Drehmoments in beide Richtungen identisch weit auslenkbar ist (gleicher Auslenkwinkel).

Vorzugsweise sind die elastischen Gummistränge jeweils in Axialrichtung der Gehäuse in die jeweiligen Zwischenräume eingepresst. Hierdurch wird jeweils ein maximaler Raum innerhalb der Zwischenräume mit elastischem Material gefüllt. Gleichzeitig wird die Forderung nach ausreichend Freiraum eingehalten, damit sich die Gummistränge ungehindert verformen und bewegen können.

Vorzugsweise sind die elastischen Gummistränge ausgelegt, bei einem Verdrehen zwischen dem Innengehäuse und dem Aussengehäuse im Bereich der Zwischenräume entlang der Aussenfläche des Innengehäuses und der Innenfläche des Aussengehäuses abzurollen. Bei dieser Ausgestaltung können die Gummistränge eine im Querschnitt abgerundete Form haben. Der Querschnitt der Gummistränge im unbelasteten Zustand kann eine kreisförmige oder elliptische Form haben. Hierdurch können die Gummistränge beim Verdrehen der Gehäuse in Relation zueinander gleichförmig und maximal grossflächig entlang der Flächen der Gehäuse walken.

Vorzugsweise ist das Innengehäuse in Relation zum Aussengehäuse von einer Ruheposition aus in einem begrenzten Schwenkbereich, innerhalb dessen ein rückführendes Drehmoment erzeugbar ist, verdrehbar. Es können Begrenzungseinrichtungen, z.B. Stopper, vorgesehen sein, welche ein Verdrehen der Gehäuse in Relation zueinander über den maximal zulässigen Schwenkbereich hinaus, d.h. in Schwenkbereichen, in welchen ein rückführendes Drehmoment nicht mehr oder nicht mehr zuverlässig erzeugbar ist, verhindern. Hierdurch wird das Gummifederelement des Gummifederelement-Drehwinkelmesssystems gegen eine Zerstörung geschützt, wird die Lebensdauer des Gummifederelements erhöht und/oder wird es ermöglicht, dass das Innengehäuse nach dem Wegfall des angelegten Drehmoments stets zuverlässig die vorgegebene Ruheposition in Relation zum Aussengehäuse einnimmt.

Vorzugsweise umfasst das Gummifederelement-Drehwinkelmesssystem ferner einen Messverstärker, welcher der Erfassungsvorrichtung vorgeschaltet ist, zum Verstärken der Messsignale. Der Messverstärker erlaubt die Erfassung auch geringster Änderungen der elektrischen Eigenschaften innerhalb der elastischen Gummistränge, z.B. die Erfassung einer Veränderung des elektrischen Widerstandes der Gummistränge. Gleichbedeutend werden geringste Änderungen des durch die Gummistränge fliessenden Stroms sowie Änderungen der kapazitiven oder induktiven Eigenschaften innerhalb der elastischen Gummistränge erfasst. Hierdurch wird die Zuverlässigkeit der Erfassung eines Verdrehens an sich zwischen den Gehäusen in Relation zueinander erhöht. Ferner wird die Genauigkeit zum Bestimmen des Drehwinkels beim Verdrehen erhöht.

Vorzugsweise ist die Ausgabeeinheit ausgelegt, eine Winkelangabe in Ansprechen auf das Ausgangssignal auszugeben. Hierdurch ist ein Gummifederelement-Drehwinkelmesssystem bereitgestellt, welches ein Bestimmen eines Drehwinkels zwischen den Gehäusen seines Gummifederelements in Relation zueinander ermöglicht. Der Drehwinkel kann beispielsweise durch Ausgabe an eine digitale oder analoge Anzeigeeinheit abgelesen werden.

Vorzugsweise umfasst die Veränderung der elektrischen Eigenschaft eine Veränderung der kapazitiven, induktiven und/oder resistiven Eigenschaft. Hierdurch ist eine zuverlässige und präzise Drehwinkelerfassung ermöglicht.

Vorzugsweise enthält die Erfassungsvorrichtung einen Kapazitätsmesssensor, Induktionsmesssensor und/oder Widerstandsmesssensor. Diese Messsensoren sind kostengünstig und präzise in der Erfassung von sich ändernden elektrischen Eigenschaften und/oder in der Bestimmung von jeweils zu bestimmenden elektrischen Grössen.

Die zuvor genannte Aufgabe wird zudem durch eine Verwendung eines Gummifederelement-Drehwinkelmesssystems nach einem der Ansprüche 1 bis 11 zur Schwingungsdämpfung von schwenkbar gelagerten Achsen von Fahrzeugen, und zum Bestimmen einer Auslenkung der Achsen in Relation zum unbelasteten Zustand des Fahrzeugs und/oder zum Bestimmen der verbleibenden Lebensdauer eines im Gummifederelement-Drehwinkelmesssystem umfassten Gummifederelements gelöst.

Hierbei kann das Gummifederelement-Drehwinkelmesssystem als Schwingungsdämpfer in einem Fahrzeug, z.B. Kraftfahrzeug, Nutzfahrzeug, Motorrad oder Anhänger, Anwendung finden. Parallel hierzu kann jeweils ein Stossdämpfer zum Abbau von Bewegungsenergie nebengeordnet sein. Beispielsweise zeichnet die dem Gummifederelement-Drehwinkelmesssystem zugeordnete Drehwinkelmessanordnung den jeweiligen Drehwinkel auf. In Ansprechen hierauf können Signale ausgegeben werden, welche auf eine überhöhte Drehung der Gummifederelemente, respektive Schwingung, beispielsweise bei einer Geländefahrt bei überhöhter Geschwindigkeit, usw., hinweisen. Es kann beispielsweise vorgesehen sein, dass der Fahrer hierauf hingewiesen wird, z.B. in Form einer optischen oder akustischen Warnmeldung. Alternativ oder zusätzlich kann steuerungsmässig direkt auf das Motor-/Fahrmanagement eingewirkt werden.

Die zuvor genannte Aufgabe wird zudem durch eine Verwendung eines Gummifederelement-Drehwinkelmesssystems nach einem der Ansprüche 1 bis 11 zur Schwingungsdämpfung von auslenkbar gelagerten Bauteilen von einer Maschine, und zum Bestimmen der Auslenkung der gelagerten Bauteile in Relation zueinander und/oder zum Bestimmen der verbleibenden Lebensdauer eines im Gummifederelement-Drehwinkelmesssystem umfassten Gummifederelements gelöst.

Beispielsweise kann das Gummifederelement-Drehwinkelmesssystem als Schwingungsdämpfer in einer Rüttelvorrichtung zum Verdichten von Erdboden Anwendung finden. Ein weiterer Anwendungsbereich ist in einer Kies-Separierungseinrichtung zu finden. In einer solchen Einrichtung wird Kiesmaterial einer Masse von 6'000 bis zu 20'000 kg in Schwingung versetzt, um hierdurch separiert zu werden. Aufgrund der sehr hohen Kräfte, die hierbei auf die Gummifederelemente einwirken, sind diese einem hohen Verschleiss unterworfen. Ein rechtzeitiges Auswechseln dieser Gummifederelemente vor deren Versagen ist unumgänglich, um hohe Folgeschäden an der Separierungseinrichtung zu verhindern. Es kann eine Kombination aus mehreren hintereinander oder parallel zueinander geschalteten Gummifederelementen vorgesehen sein.

Im Folgenden wird die Erfindung anhand eines Ausführungsbeispiels näher erläutert. Hierbei zeigen:
- Figur 1: eine schematische Ansicht des Gummifederelement-Drehwinkelmesssystems, bei welcher das Gummifederelement in Ruheposition gezeigt ist;
- Figur 2: die in Figur 1 gezeigte Ansicht, bei welcher das Innengehäuse und das Aussengehäuse in Relation zueinander ausgelenkt sind; und
- Figuren 3a,b: einen Kurvenverlauf des Messstroms in Relation zum Winkelversatz und zur Zeit, und einen Kurvenverlauf des Messstroms in Relation zum Drehmoment und zur Zeit.

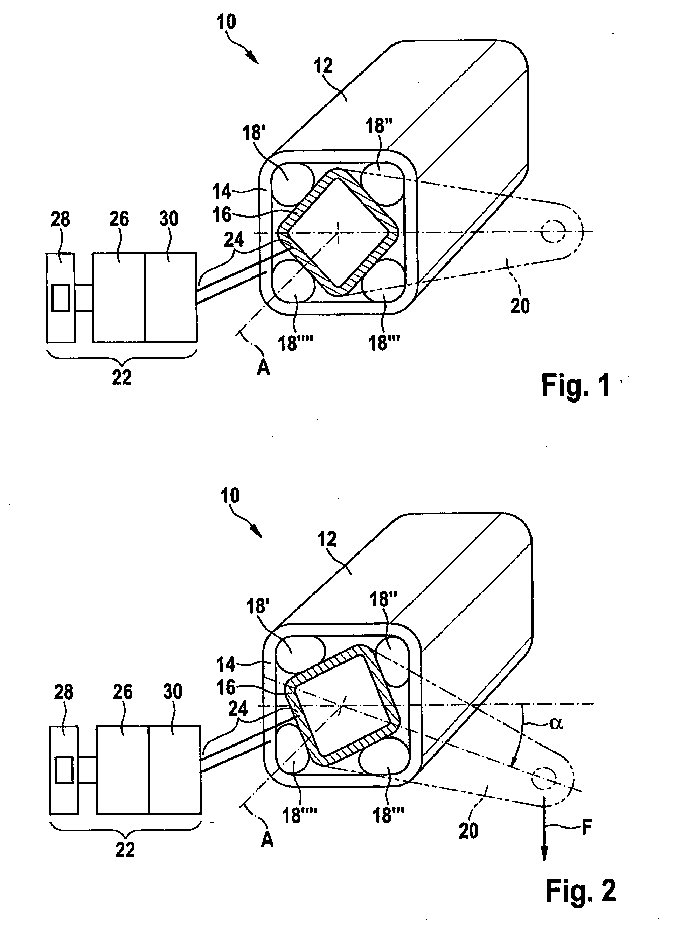

Figuren 1 und 2 zeigen ein Gummifederelement-Drehwinkelmesssystem 10 gemäss der Erfindung mit einer Vorderansicht in Perspektivdarstellung eines zugehörigen Gummifederelements 12. Figur 1 zeigt das Gummifederelement 12 im Ruhezustand, bzw. unbelasteten Zustand. Hierbei sind die Kanten eines Aussengehäuses 14 und eines Innengehäuses 16 des Gummifederelements 12 in Relation zueinander um einen Winkel von 45° versetzt. Figur 2 zeigt hingegen das Gummifederelement 12 in einem belasteten Zustand. In diesem Beispiel sind das Aussengehäuse 14 und das Innengehäuse 16 in Relation zu der in Figur 1 gezeigten Anordnung bei einem Winkel von α = 20° versetzt.

Bei dem Gummifederelement 12 haben das Aussengehäuse 14 und das Innengehäuse 16 einen rechteckigen Querschnitt (beispielsweise ein Vierkantstahl). Es sind auch weitere polygonale Querschnitte möglich, solange die polygonalen Formen von Innengehäuse und Aussengehäuse, d.h. die Anzahl von Eckpunkten, identisch sind.

Das Innengehäuse 16 ist axial in das Aussengehäuse 14 eingeschoben. Das Innengehäuse 16 und das Aussengehäuse 14 sind ferner zueinander konzentrisch ausgerichtet. Genauer gesagt, sind das Innengehäuse 16 und das Aussengehäuse 14 derart zueinander angeordnet, dass sich deren Achsen bei einem zumindest abschnittsweisen Verdrehen der Gehäuse 14, 16 in Relation zueinander auf einer gleichen Achse A erstrecken. Das Innengehäuse 16 und das Aussengehäuse 14 sind aus einem elektrisch leitfähigen Material erstellt, beispielsweise Metall, vorzugsweise rostfreier Stahl.

Das Innengehäuse 16 und das Aussengehäuse 14 haben zueinander ein derartiges Ausmass, dass sie sich, derart konzentrisch angeordnet, bei einem jeglichen Drehwinkel in Relation zueinander an keiner Stelle direkt berühren werden. Wie bereits beschrieben, sind die beiden Gehäuse 14, 16 zueinander derart angeordnet, dass deren Kanten im Ruhezustand zueinander um 45° verdreht sind. Hierdurch sind vier im Querschnitt im Wesentlichen dreieckförmige Zwischenräume gebildet. In diese Zwischenräume sind jeweils elastische Gummistränge 18'-18'''' eingepresst, deren Längsrichtungen jeweils in Axialrichtung der Gehäuse 14, 16 ausgerichtet sind. Hierdurch ist das Innengehäuse 16 in der zuvor beschriebenen Anordnung in Relation zum Aussengehäuse 14 ausgerichtet. Genauer gesagt, ist das Innengehäuse 16 an seinen vier Kanten elastisch an den vier elastischen Gummisträngen 18'-18'''' abgestützt, welche wiederum an den vier Ecken des Aussengehäuses 14 Anschlag finden.

Figur 2 zeigt die in Figur 1 gezeigte Ansicht des Gummifederelement-Drehwinkelmesssystems 10 mit dem Gummifederelement 12, wobei das Innengehäuse 16 und das Aussengehäuse 16 des Gummifederelements 12 in Relation zu der in Figur 1 gezeigten Anordnung ausgelenkt sind. Sobald zwischen dem Innengehäuse 16 und dem Aussengehäuse 14 ein Drehmoment angelegt wird, geben die eingelegten elastischen Gummistränge 18'-18'''' dem durch die Kanten des Innengehäuses 16 auf sie angelegten Druck nach, indem sie ihre Form verändern und sich an den Innen- bzw. Aussenflächen der Gehäuse 14, 16 abwälzen. Das Drehmoment kann durch direkte Torsion auf das Innengehäuse 16 oder, wie in der Figur 2 gezeigt, durch Krafteinwirkung F auf einen am Innengehäuse 16 angelenkten Hebel 20, jeweils bei fixiertem Aussengehäuse 14, angelegt werden.

In der Figur 2 ist hierzu ein Beispiel gezeigt, bei welchem der Hebel 20 beispielsweise durch Schweissen direkt an das Innengehäuse 16 angelenkt ist. Dieser Hebel 20 ist in dem gezeigten Beispiel durch die Krafteinwirkung F bei einem Winkel von α = 20° in Relation zu seiner Ruheposition ausgelenkt. In der Figur 2 ist zudem die Form- und Lageänderung der elastischen Gummistränge 18'-18'''' angezeigt. Sobald das Drehmoment reduziert wird, streben die elastischen Gummistränge 18'-18'''' aufgrund ihrer Elastizität wieder ihre ursprüngliche Form und Lage an.

Das in Figuren 1 und 2 gezeigte Gummifederelement 12 ist elektrisch mit einer Messanordnung 22 verbunden. Genauer gesagt, sind die elektrisch leitfähigen Gehäuse 14, 16 über elektrische Leiter 24 mit einer Erfassungsvorrichtung 26 der Messanordnung 22 verbunden. Die Erfassungsvorrichtung 26 ist ausgelegt, eine Veränderung von wenigstens einer elektrischen Eigenschaft innerhalb der elastischen Gummistränge 18'-18'''', welche durch eine Formveränderung der elastischen Gummistränge 18'-18'''' im Verlaufe eines Verdrehens zwischen dem Innengehäuse 16 und dem Aussengehäuse 14 hervorgerufen wird, zu erfassen und ein Ausgangssignal in Ansprechen auf die Veränderung des elektrischen Widerstandes an eine Ausgabeeinheit 28 auszugeben. Die Erfassungsvorrichtung 26 ist ausgelegt, eine Veränderung der kapazitiven, induktiven und/oder resistiven Eigenschaft der elastischen Gummistränge 18'-18'''' zu erfassen bzw. deren Grösse zu bestimmen.

Wie in den Figuren 1 und 2 gezeigt, kann der Erfassungsvorrichtung 26 ein elektrischer Messverstärker 30 vorgeschaltet sein, welcher die Amplitude der Messsignale verstärkt und diese verstärkten Messsignale an die Erfassungsvorrichtung 26 überträgt.

Die Ausgabeeinheit 28 ist ausgelegt, eine Winkelangabe in Ansprechen auf das Ausgangssignal der Erfassungsvorrichtung 26 auszugeben. Die Ausgabeeinheit 28 kann eine Anzeigeeinheit sein, welche die Winkelangabe digital oder analog anzeigt.

Alternativ oder zusätzlich kann die Ausgabe der Erfassungsvorrichtung 26, welche dem Winkelversatz zwischen dem Innengehäuse 16 und dem Aussengehäuse 14 entspricht, an eine Steuereinheit (nicht gezeigt) zugeführt werden. Diese Steuereinheit kann dazu ausgelegt sein, in Ansprechen auf die Winkelversatz-Angabe entsprechende Steuerungen auf beispielsweise Antriebsvorrichtungen einer mit dem Gummifederelement-Drehwinkelmesssystem 10 bestückten Maschine auszuüben. Somit kann beispielsweise ein Motorsteuer-Management der Maschine an den jeweils erfassten Winkelversatz-Angaben angepasst werden. Zeigt die Winkelversatz-Angabe beispielsweise einen Winkelversatzwert an, welcher einen vorgeschriebenen Winkelversatz-Maximalwert einmalig, oder über eine vorgeschriebene Zeitdauer gemittelt, überschreitet, so kann die Leistung einer Antriebsvorrichtung dieser Maschine, beispielsweise die Umdrehungszahl, reduziert werden, wobei dieser Reduzierung der Umdrehungszahl auch eine Reduktion des Winkelversatzes einhergeht. Die Umdrehungszahl der Antriebsvorrichtung kann hierbei beispielsweise derart geregelt werden, dass der Winkelversatzwert unterhalb des Winkelversatz-Maximalwerts bleibt. Zur Realisierung dieser Regelung ist eine fortdauernde Abtastung des Winkelversatzes zwischen den Gehäusen des Gummifederelements notwendig.

Alternativ oder zusätzlich kann vorgesehen sein, dass in der Steuereinheit oder in der Erfassungsvorrichtung 26 selber die erfassten Winkelversatzwerte in Relation zu der zugehörigen Zeitdauer (Netto-Betriebsdauer) kumuliert werden, um hieraus eine Aussage über die Abnutzung des jeweiligen Gummifederelements 12 treffen zu können. Somit kann beispielsweise bestimmt werden, ob das Gummifederelement 12 in einem dauerhaft funktionsfähigen Zustand ist oder aufgrund von Verschleiss ausgetauscht werden sollte. Basierend auf den Messdaten kann ebenfalls rechnerisch eine Prognose erstellt werden, wann ein Austausch des Gummifederelements 12 notwendig erscheint. Alternativ kann die zuvor beschriebene Steuereinheit auch in der Erfassungsvorrichtung 26 integriert sein.

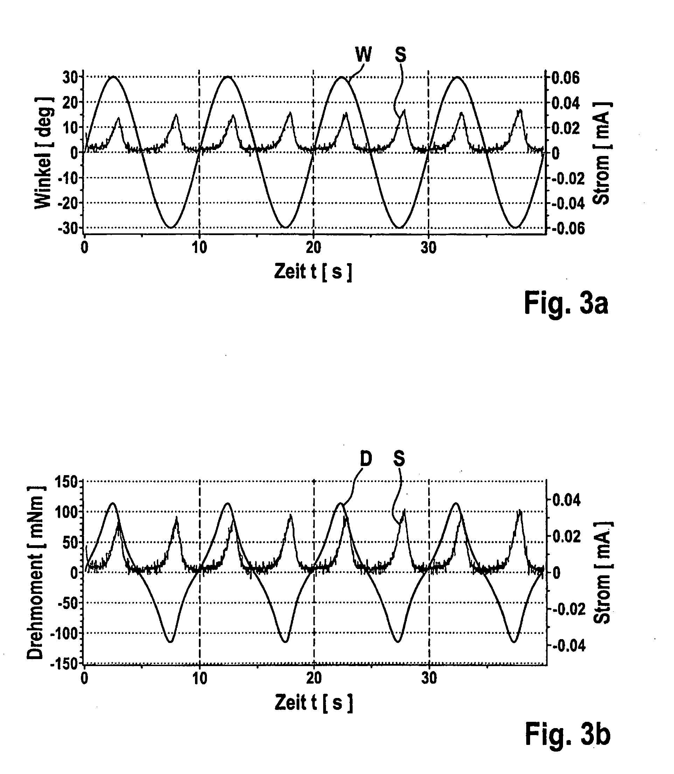

Figuren 3a und b zeigen jeweils einen Kurvenverlauf des Messstroms S in Relation zum Winkelversatz W, aufgetragen zur Zeit t, und einen Kurvenverlauf des Messtroms S in Relation zum Drehmoment D, aufgetragen zur Zeit t. Diese beispielsweise über ein Oszilloskop aufgenommenen Kurvenverläufe veranschaulichen das wesentliche Prinzip des Gummifederelement-Drehwinkelmesssystems gemäss der vorliegenden Erfindung. Hierzu wird der Winkelversatz zwischen Innengehäuse und Aussengehäuse des Gummifederelements in Relation zur Zeit sinusförmig zwischen -30° und +30° verändert. Gleichzeitig wird ein über die Gehäuse und durch die Gummistränge fliessender Strom gemessen. Hierbei ist anzumerken, dass alternativ der entsprechende elektrische Widerstand gemessen werden kann. Dem Fachmann ist klar, dass zur Bestimmung die Gleichung R = U/I herangezogen wird, wobei R, unter Vernachlässigung des elektrischen Widerstandes der metallischen Gehäuse, den elektrischen Gesamtwiderstand der Gummistränge bezeichnet. Unter der Annahme einer konstanten Messspannung U verhalten sich R und I somit zueinander gegenproportional.

Wie anhand des Kurvenverlaufes von Figur 3a zu erkennen, wenn die Gehäuse des Gummifederelements in Relation zueinander in Ruheposition bzw. von der Ruheposition minimal versetzt ausgelenkt sind, ist der elektrische Widerstand der Gummistränge nahezu unendlich hoch. Respektive beträgt die Höhe des Stromflusses I = 0 A.

Bei variierender Auslenkung der Gehäuse in Relation zur Ruheposition steigt der Stromfluss mit zunehmender Auslenkung nahezu proportional an. Bei maximaler Auslenkung, d.h. bei Auslenkung mit +/- 30°, fliesst ein maximaler Strom in Höhe von ungefähr I = 30 µA durch das Material der elastischen Gummistränge. Basierend auf den erfassten Messströmen kann somit vorteilhafterweise ein Rückschluss auf den Betrag des Winkelversatzes gezogen werden.

In Figur 3b ist ein Kurvenverlauf des Messstroms S in Relation zum Drehmoment D, aufgetragen zur Zeit t, gezeigt. Wie zu erwarten, sind vergleichbare Ergebnisse zu dem Vorgenannten messbar. Bei einem sinusförmig variierenden Drehmoment, welches zwischen Innengehäuse und Aussengehäuse des Gummifederelements angelegt wird, variiert auch der Messstrom in angenäherter Proportionalität zum angelegten Drehmoment.

## Patentansprüche

1. Gummifederelement-Drehwinkelmesssystem (10) mit zumindest einem Gummifederelement (12), welches ein Aussengehäuse (14) und ein hierin eingesetztes Innengehäuse (16) enthält, wobei die Gehäuse (14, 16) derart in Relation zueinander angeordnet sind, dass eine Vielzahl von Zwischenräumen zwischen dem Aussengehäuse (14) und dem Innengehäuse (16) gebildet ist, welche jeweils teilweise mit elastischen Gummisträngen (18'-18'''') als Federelement gefüllt sind, welche das Innengehäuse (16) derart in Relation zum Aussengehäuse (14) gelagert halten, dass sich die Achsen des Innengehäuses (16) und Aussengehäuses (14) bei einem zumindest abschnittsweisen Verdrehen der Gehäuse (14, 16) in Relation zueinander auf einer gleichen Achse (A) erstrecken, **dadurch gekennzeichnet, dass**
das Innengehäuse (16) und das Aussengehäuse (14) aus einem elektrisch leitfähigen Material erstellt sind, und
das Gummifederelement-Drehwinkelmesssystem (10) ferner eine Drehwinkelmessanordnung (22) mit einer Erfassungsvorrichtung (26) umfasst, welche über elektrische Leitungen (24) mit jeweils dem Innengehäuse (16) und dem Aussengehäuse (14) elektrisch verbunden ist, wobei die Erfassungsvorrichtung (26) ausgelegt ist, eine Veränderung von wenigstens einer elektrischen Eigenschaft innerhalb der elastischen Gummistränge (18'-18''''), welche durch eine Formveränderung der elastischen Gummistränge (18'-18'''') im Verlaufe eines Verdrehens zwischen dem Innengehäuse (16) und dem Aussengehäuse (14) hervorgerufen ist, zu erfassen, und ein Ausgangssignal in Ansprechen auf die Veränderung der elektrischen Eigenschaft an eine Ausgabeeinheit (28) auszugeben.

2. Gummifederelement-Drehwinkelmesssystem (10) nach Anspruch 1, bei welchem das Innengehäuse (16) und das Aussengehäuse (14) jeweils eine polygonale Innen- und/oder Aussenfläche haben.

3. Gummifederelement-Drehwinkelmesssystem (10) nach Anspruch 2, bei welchem das Innengehäuse (16) und das Aussengehäuse (14) jeweils eine rechteckige Innen- und/oder Aussenfläche haben.

4. Gummifederelement-Drehwinkelmesssystem (10) nach Anspruch 3, bei welchem das Innengehäuse (16) und das Aussengehäuse (14) durch die elastischen Gummistränge (18'-18'''') bei in Relation zueinander um 45° versetzter Innen- und/oder Aussenfläche gehalten sind.

5. Gummifederelement-Drehwinkelmesssystem (10) nach einem der vorhergehenden Ansprüche, bei welchem die elastischen Gummistränge (18'-18'''') jeweils in Axialrichtung der Gehäuse (14, 16) in die jeweiligen Zwischenräume eingepresst sind.

6. Gummifederelement-Drehwinkelmesssystem (10) nach einem der vorhergehenden Ansprüche, bei welchem die elastischen Gummistränge (18'-18'''') ausgelegt sind, bei einem Verdrehen zwischen dem Innengehäuse (16) und dem Aussengehäuse (14) im Bereich der Zwischenräume entlang der Aussenfläche des Innengehäuses (16) und der Innenfläche des Aussengehäuses (14) abzurollen.

7. Gummifederelement-Drehwinkelmesssystem (10) nach einem der vorhergehenden Ansprüche, bei welchem das Innengehäuse (16) in Relation zum Aussengehäuse (14) von einer Ruheposition aus in einem begrenzten Schwenkbereich, innerhalb dessen ein rückführendes Drehmoment erzeugbar ist, verdrehbar ist.

8. Gummifederelement-Drehwinkelmesssystem (10) nach einem der vorhergehenden Ansprüche, ferner umfassend einen Messverstärker (30), welcher der Erfassungsvorrichtung (26) vorgeschaltet ist, zum Verstärken der Messsignale.

9. Gummifederelement-Drehwinkelmesssystem (10) nach einem der vorhergehenden Ansprüche, bei welchem die Ausgabeeinheit (28) ausgelegt ist, eine Winkelangabe in Ansprechen auf das Ausgangssignal auszugeben.

10. Gummifederelement-Drehwinkelmesssystem (10) nach einem der vorhergehenden Ansprüche, bei welchem die Veränderung der elektrischen Eigenschaft eine Veränderung der kapazitiven, induktiven und/oder resistiven Eigenschaft umfasst.

11. Gummifederelement-Drehwinkelmesssystem (10) nach einem der vorhergehenden Ansprüche, bei welchem die Erfassungsvorrichtung (26) einen Kapazitätsmesssensor, Induktionsmesssensor und/oder Widerstandsmesssensor enthält.

12. Verwendung eines Gummifederelement-Drehwinkelmesssystems (10) nach einem der vorhergehenden Ansprüche zur Schwingungsdämpfung von schwenkbar gelagerten Achsen von Fahrzeugen, und zum Bestimmen einer Auslenkung der Achsen in Relation zum unbelasteten Zustand des Fahrzeugs und/oder zum Bestimmen der verbleibenden Lebensdauer eines im Gummifederelement-Drehwinkelmesssystem (10) umfassten Gummifederelements (12).

13. Verwendung eines Gummifederelement-Drehwinkelmesssystems (10) nach einem der vorhergehenden Ansprüche zur Schwingungsdämpfung von auslenkbar gelagerten Bauteilen von einer Maschine, und zum Bestimmen der Auslenkung der gelagerten Bauteile in Relation zueinander und/oder zum Bestimmen der verbleibenden Lebensdauer eines im Gummifederelement-Drehwinkelmesssystem (10) umfassten Gummifederelements (12).

## Claims

1. A rubber spring element-rotation angle measuring system (10) with at least one rubber spring element (12), which contains an outer housing (14) and a herein-inserted inner housing (16), wherein the housings (14, 16) are arranged relative to one another such that a multiplicity of intermediate spaces is formed between the outer housing (14) and the inner housing (16), each of which is partially filled with an elastic rubber strand (18'-18'''') as a spring element, which elastic rubber strands hold the inner housing (16) in a mounted manner relative to the outer housing (14) such that in the event of an at least partial rotation of the housings (14, 16) the axes of the inner housing (16) and outer housing (14) extend relative to one another on the same axis (A),
**characterised in that**,
the inner housing (16) and the outer housing (14) are made from an electrically conductive material, and
the rubber spring element-rotation angle measuring system (10) further comprises a rotation angle measuring arrangement (22) with a recording device (26), which is electrically connected in each case via electrical cables (24) with the inner housing (16) and the outer housing (14), wherein the recording device (26) is designed to record an alteration of at least one electrical property within the elastic rubber strands (18'-18''''), which alteration is caused by an alteration in shape of the elastic rubber strands (18'-18'''') in the course of rotation between the inner housing (16) and the outer housing (14), and is designed to release an output signal on an output unit (28) in response to the alteration of the electrical property.

2. The rubber spring element-rotation angle measuring system (10) in accordance with claim 1, in which the inner housing (16) and the outer housing (14) in each case have a polygonal inner and/or outer surface.

3. The rubber spring element-rotation angle measuring system (10) in accordance with claim 2, in which the inner housing (16) and the outer housing (14) in each case have a rectangular inner and/or outer surface.

4. The rubber spring element-rotation angle measuring system (10) in accordance with claim 3, in which the inner housing (16) and the outer housing (14) are held by means of the elastic rubber strands (18'-18'''') with inner and/or outer surfaces displaced relative to one another by 45°.

5. The rubber spring element-rotation angle measuring system (10) in accordance with one of the preceding claims, in which each of the elastic rubber strands (18'-18'''') is pressed into the respective intermediate space in the axial direction of the housing (14, 16).

6. The rubber spring element-rotation angle measuring system (10) in accordance with one of the preceding claims, in which the elastic rubber strands (18'-18''''), in the event of a rotation between the inner housing (16), and the outer housing (14), are designed to roll along the outer surface of the inner housing (16) and the inner surface of the outer housing (14) in the domain of the intermediate spaces.

7. The rubber spring element-rotation angle measuring system (10) in accordance with one of the preceding claims, in which the inner housing (16) can be rotated relative to the outer housing from a neutral position over a limited range of pivot, within which a restorative torque can be generated.

8. The rubber spring element-rotation angle measuring system (10) in accordance with one of the preceding claims, further comprising a measuring amplifier (30), which is connected upstream of the recording device (26), in order to amplify the measuring signals.

9. The rubber spring element-rotation angle measuring system (10) in accordance with one of the preceding claims, in which the output unit (28) is designed to output angle data in response to the output signal.

10. The rubber spring element-rotation angle measuring system (10) in accordance with one of the preceding claims, in which the alteration of the electrical property comprises an alteration of the capacitive, inductive and/or resistive property.

11. The rubber spring element-rotation angle measuring system (10) in accordance with one of the preceding claims, in which the recording device (26) comprises a capacity-measuring sensor, an induction-measuring sensor and/or a resistance-measuring sensor.

12. The use of a rubber spring element-rotation angle measuring system (10) in accordance with one of the preceding claims, for purposes of the vibration damping of vehicle axes, mounted such that they can pivot, and for purposes of determining a deflection of the axes relative to the unloaded state of the vehicle, and/or for purposes of determining the residual service life of a rubber spring element (12) included in the rubber spring element-rotation angle measuring system (10).

13. The use of a rubber spring element-rotation angle measuring system (10) in accordance with one of the preceding claims, for purposes of the vibration damping of components of a machine mounted such that they can deflect, and for purposes of determining the deflection of the mounted components relative to one another, and/or for purposes of determining the residual service life of a rubber spring element (12) included in the rubber spring element-rotation angle measuring system (10).

## Revendications

1. Système de mesure d'angle de rotation d'élément résilient en caoutchouc (10) comportant au moins un élément résilient en caoutchouc (12) qui comprend un boîtier extérieur (14) et un boîtier intérieur inséré dedans (16), les boîtiers (14, 16) étant disposés en relation l'un par rapport à l'autre de manière à ce que soit constituée entre le boîtier extérieur (14) et le boîtier intérieur (16) une multitude d'intervalles qui sont remplis respectivement en partie de cordons de caoutchouc élastique (18'-18'''') faisant office d'élément résilient et qui maintiennent le boîtier intérieur (16) par rapport au boîtier extérieur (14) de manière à ce que les axes du boîtier intérieur (16) et du boîtier extérieur (14), en cas de rotation du moins par sections, des boîtiers (14, 16), s'étendent l'un par rapport à l'autre sur un même axe (A), **caractérisé en ce que**
le boîtier intérieur (16) et le boîtier extérieur (14) sont réalisés à partir d'un matériau conducteur électrique et
que le système de mesure d'angle de rotation d'élément résilient en caoutchouc (10) comprend en outre un dispositif de mesure d'angle de rotation (22) équipé d'un dispositif de détection (26) qui est relié électriquement par des câbles électriques (24) respectivement au boîtier intérieur (16) et au boîtier extérieur (14), le dispositif de détection (26) étant conçu pour détecter dans les cordons en caoutchouc élastique (18'-18'''') une modification d'au moins une propriété électrique qui est due à une modification de forme des cordons en caoutchouc élastique (18'-18'''') au cours d'une rotation entre le boîtier intérieur (16) et le boîtier extérieur (14) et à émettre un signal de sortie en réaction à la modification de la propriété électrique vers une unité d'édition (28).

2. Système de mesure d'angle de rotation d'élément résilient en caoutchouc (10) selon la revendication 1, dans lequel le boîtier intérieur (16) et le boîtier extérieur (14) ont respectivement une surface intérieure et extérieure polygonales.

3. Système de mesure d'angle de rotation d'élément résilient en caoutchouc (10) selon la revendication 2, dans lequel le boîtier intérieur (16) et le boîtier extérieur (14) ont respectivement une surface intérieure et extérieure rectangulaires.

4. Système de mesure d'angle de rotation d'élément résilient en caoutchouc (10) selon la revendication 3, dans lequel le boîtier intérieur (16) et le boîtier extérieur (14) sont maintenus par les cordons en caoutchouc élastique (18' -18'''') dans le cas où les surface intérieure et/ou extérieure sont décalées de 45° l'une par rapport à l'autre.

5. Système de mesure d'angle de rotation d'élément résilient en caoutchouc (10) selon une des revendications précédentes, dans lequel les cordons en caoutchouc élastique (18'-18'''') sont respectivement enfoncés dans le sens axial des boîtiers (14, 16) dans les intervalles respectifs.

6. Système de mesure d'angle de rotation d'élément résilient en caoutchouc (10) selon une des revendications précédentes, dans lequel les cordons en caoutchouc élastique (18'-18'''') sont conçus, en cas de rotation entre le boîtier intérieur (16) et le boîtier extérieur (14), pour rouler au niveau des intervalles le long de la surface extérieure du boîtier intérieur (16) et de la surface intérieure du boîtier extérieur (14).

7. Système de mesure d'angle de rotation d'élément résilient en caoutchouc (10) selon une des revendications précédentes, dans lequel le boîtier intérieur (16) peut être tourné par rapport au boîtier extérieur (14) depuis une position de repos dans une zone de pivotement à l'intérieur de laquelle un couple de rotation de renvoi peut être généré.

8. Système de mesure d'angle de rotation d'élément résilient en caoutchouc (10) selon une des revendications précédentes, comprenant en outre un amplificateur de mesure (30) qui est branché en amont du dispositif de détection (26) pour amplifier les signaux de mesure.

9. Système de mesure d'angle de rotation d'élément résilient en caoutchouc (10) selon une des revendications précédentes, dans lequel l'unité d'édition (28) est conçue pour éditer une indication d'angle en réaction au signal de sortie.

10. Système de mesure d'angle de rotation d'élément résilient en caoutchouc (10) selon une des revendications précédentes, dans lequel la modification de la propriété électrique comprend une modification de la propriété capacitive, inductive et/ou résistive.

11. Système de mesure d'angle de rotation d'élément résilient en caoutchouc (10) selon une des revendications précédentes, dans lequel le dispositif de détection (26) comprend un capteur de mesure de capacité, un capteur de mesure d'induction et/ou un capteur de mesure de résistance.

12. Utilisation d'un système de mesure d'angle de rotation d'élément résilient en caoutchouc (10) selon une des revendications précédentes pour amortir la vibration d'axes s'appuyant de manière à pouvoir pivoter et pour déterminer les variations des axes par rapport à l'état non chargé du véhicule ou pour déterminer la durée de vie restante système de mesure d'angle de rotation d'un élément résilient en caoutchouc (12) compris dans le système de mesure d'angle de rotation d'élément résilient en caoutchouc (10).

13. Utilisation d'un système de mesure d'angle de rotation d'élément résilient en caoutchouc (10) selon une des revendications précédentes pour amortir la vibration de pièces s'appuyant de manière à pouvoir être déviées d'une machine et pour déterminer la déviation des pièces en appui les unes par rapport aux autres et/ou pour déterminer la durée de vie restante d'un élément résilient en caoutchouc (12) compris dans le système de mesure d'angle de rotation d'élément résilient en caoutchouc (10).
